# EUROPEAN PATENT SPECIFICATION

(11) **EP 1 971 642 B1**
(45) Date of publication and mention of the grant of the patent: **31.03.2010**
(21) Application number: 06844441.3
(22) Date of filing: 20.11.2006
(51) Int. Cl.: C08K 5/29, C08L 77/00, C08K 7/06

(54) **CARBON FIBER REINFORCED POLYAMIDE RESIN COMPOSITION**
KOHLEFASERVERSTÄRKTE POLYAMIDHARZZUSAMMENSETZUNG
COMPOSITION DE RÉSINE POLYAMIDE RENFORCÉE DE FIBRES DE CARBONE

(30) Priority: 23.11.2005 US 739590 P
(43) Date of publication of application: 24.09.2008
(73) Proprietor: E.I. DU PONT DE NEMOURS AND COMPANY, Wilmington, DE 19898 (US)
(72) Inventor: SHINOHARA, Kenichi, Utsunomiya-shi, Tochigi 320-0003 (JP)
(74) Representative: Heinemann, Monica
(86) International application number: PCT/US2006/044922
(87) International publication number: WO 2007/061965

(56) References cited:
- WO-A-96/06890
- GB-A- 1 384 060
- US-A1- 4 442 254
- US-A1- 2004 010 094
- DATABASE WPI Week 199810 Derwent Publications Ltd., London, GB; AN 1998-105219 XP002425062 -& JP 09 328609 A (NIPPON GOSEI GOMU KK) 22 December 1997 (1997-12-22)

## Description

### FIELD OF THE INVENTION

The present invention relates to polyamide resin composition. More particularly, the present invention relates to a polyamide resin composition comprising polycarbodiimide, carbon fibers treated with a sizing agent, and, optionally, impact modifiers. The polyamide compositions have good impact resistance.

### BACKGROUND OF THE INVENTION

Polyamide compositions are used in a wide variety of applications because of their excellent physical properties, chemical resistance, and processability. Common applications include automotive parts and electrical and electronic parts. Though polyamides have good inherent toughness, low-elasticity rubber impact modifiers are often used to increase the toughness of polyamide compositions. However, the addition of these impact modifiers can reduce the stiffness of the resulting resin. Stiffness can be improved by the addition of reinforcing agents and fillers, particularly inorganic reinforcing agents (for example, glass fibers) and mineral fillers, but this measure can lead to further problems with wear on processing equipment, anisotropy, and increased melt viscosities. For example, when a polyamide composition reinforced with glass fibers is used in a part that is used under high loads, such as a gear, powder worn from the part may damage other components in the vicinity.

Hence, a polyamide composition containing impact modifiers that has good stiffness without the need to add glass fibers as reinforcing agents would be desirable.

It is known that impact strength can be markedly improved by adding an elastomeric material modified with reactive functional groups to polyamide resins. For example, a toughened polyamide blend is disclosed in US patent 4,346,194, which contains a) 60 to 97 weight percent polyamide (a mixture of 66 nylon and 6 nylon) and b) 3 to 40 weight percent of a polymeric toughening agent selected from (i) an elastomeric olefin copolymer with carboxyl or carboxylate functionality or (ii) an ionic copolymer of at least one α-olefin and at least one α,β-unsaturated carboxylic acid, which can contain a ternary copolymerizable monomer, and which is at least partially ionized by neutralizing its acidic ingredients with a metallic basic salt.

Polyamide compositions have been disclosed in which melt viscosity and resistance to hydrolysis have been improved by the addition of polycarbodiimides. For example, a polycarbodiimide modified tractable polyamide product is disclosed in US patent 4,128,599 with unique rheological properties and improved shear properties. It is disclosed that the polycarbodiimide functions as a bridging agent in which the carbodiimide group bridges the terminal COOH and the NH₂ group in the polyamide.

US patent 5,360,888 discloses a polyamide resin composition containing 0.1 to 5 weight aromatic polycarbodiimide that is stabilized to hydrolysis at high temperatures.

US patent application publication 2004/0010094 discloses a polyamide resin composition comprising aromatic or aliphatic polycarbodiimides in a ratio of 0.10 to 3.5 molar equivalents of carbodiimide groups to acid end groups in the polyamide.

The composition of the present invention has high rigidity and impact strength without requiring the presence of glass fibers.

### SUMMARY OF THE INVENTION

Briefly stated, and in accordance with one aspect of the present invention, there is provided a polyamide composition, comprising: (a) at least one polyamide; (b) carbon fibers containing at least one sizing agent; (c) at least one polycarbodiimide, and 2-29.7 weight percent of impact modifier (d) based on the total weight of the composition.

Pursuant to another aspect of the present invention, there is provided an article molded from a polyamide composition, comprising: (a) at least one polyamide; (b) carbon fibers containing at least one sizing agent; and (c) at least one polycarbodiimide, wherein the composition comprises 2 to 29.7 weight percent of impact modifier (d), based on the total weight of the composition.

### DETAILED DESCRIPTION OF THE INVENTION

The compositions of the present invention comprise polyamide, polycarbodiimide, carbon fibers treated with a sizing agent, and impact modifiers.

### Polyamide

The polyamide of the composition of the present invention is at least one thermoplastic polyamide according to claim 1. The polyamide may be homopolymer, copolymer, terpolymer or higher order polymer. Blends of two or more polyamides may be used. Suitable polyamides can be condensation products of dicarboxylic acids or their derivatives and diamines, and/or aminocarboxylic acids, and/or ring-opening polymerization products of lactams. Suitable dicarboxylic acids include, adipic acid, azelaic acid, sebacic acid, dodecanedioic acid, isophthalic acid and terephthalic acid. Suitable diamines include tetramethylenediamine, hexamethylenediamine, octamethylenediamine, nonamethylenediamine, dodecamethylenediamine, 2-methylpentamethylenediamine, 2-methyloctamethylenediamine, trimethylhexamethylenediamine, bis(p-aminocyclohexyl)methane, *m*-xylylenediarnine, and *p*-xylylenediamine. A suitable aminocarboxylic acid is 11-aminododecanoic acid. Suitable lactams include caprolactam and laurolactam.

Preferred aliphatic polyamides include polyamide 6; polyamide 66; polyamide 46; polyamide 69; polyamide 610; polyamide 612; polyamide 1010; polyamide 11; polyamide 12; semi-aromatic polyamides such as poly(m-xylylene adipamide) (polyamide MXD6), poly(dodecamethylene terephthalamide) (polyamide 12T), poly(decamethylene terephthalamide) (polyamide 10T), poly(nonamethylene terephthalamide) (polyamide 9T), the polyamide of hexamethylene terephthalamide and hexamethylene adipamide (polyamide 6T/66); the polyamide of hexamethyleneterephthalamide and 2-methylpentamethyleneterephthalamide (polyamide 6T/DT); the polyamide of hexamethylene isophthalamide and hexamethylene adipamide (polyamide 6I/66); the polyamide of hexamethylene terephthalamide, hexamethylene isophthalamide, and hexamethylene adipamide (polyamide 6T/6I/66) and copolymers and mixtures of these polymers.

Examples of suitable aliphatic polyamides include polyamide 66/6 copolymer; polyamide 66/68 copolymer; polyamide 66/610 copolymer; polyamide 66/612 copolymer; polyamide 66/10 copolymer; polyamide 66/12 copolymer; polyamide 6/68 copolymer; polyamide 6/610 copolymer; polyamide 6/612 copolymer; polyamide 6/10 copolymer; polyamide 6/12 copolymer; polyamide 6/66/610 terpolymer; polyamide 6/66/69 terpolymer; polyamide 6/66/11 terpolymer; polyamide 6/66/12 terpolymer; polyamide 6/610/11 terpolymer; polyamide 6/610/12 terpolymer; and polyamide 6/66/PACM (bis-p-{aminocyclohexyl} methane) terpolymer.

A preferred polyamide is polyamide 66. Blends of polyamides with other thermoplastic polymers may be used. The polyamide is preferably present in about 65 to about 94.7 weight percent, or more preferably in about 75 to about 94.7 weight percent, or yet more preferably about 85 to about 90 weight percent, based on the total weight of the composition.

### Carbon Fibers

The carbon fibers can be any type, including, for example, those made from polyacrylonitrile (PAN), pitch, rayon, and/or cellulose fibers.

The carbon fibers are surface-treated with one or more sizing agents. Examples of suitable sizing agents include polyamides, urethanes, and epoxies. The presence of the sizing can help keep the fibers in the form of a bundle when bundles of long fibers are cut into chopped fibers having a length of several mm. This can help to improve the dispersibility of the fibers in the composition. The sizing is present in the carbon fibers in about 1 to about 10 weight percent, based on the total weight of sizing agent and carbon fibers. The carbon fibers may be treated with the sizing agent using any suitable method known in the art.

It is thought that the sizing agent can react with the polycarbodiimide, hence improving compatibility of the carbon fibers and polyamide, and hence improving physical properties. Preferred sizing agents are those that can react with a polycarbodiimide, such as polyamides and urethanes. Epoxy compounds may also be used as sizing agents, although it is believed that they do not react directly with the polycarbodiimide.

Suitable carbon fibers containing sizing agents can be purchased commercially. An example of suitable commercially available carbon fibers is Besfight® supplied by Toho Tenax, Co., Ltd.

The carbon fibers are preferably present in the composition in about 5 to about 30 weight percent, or more preferably about 5 to about 20 weight percent, or yet more preferably about 8 to about 15 weight percent, based on the total weight of the composition.

### Polycarbodiimide

The polycarbodiimide can be an aliphatic, alicyclic, or aromatic polycarbodiimide, and may be represented by the following chemical formula: 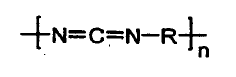 where the R group represents an aliphatic, alicyclic, or aromatic group.

Examples of suitable R groups include, but are not limited to, divalent radicals derived from 2,6-diisopropylbenzene, naphthalene, 3,5-diethyltoluene, 4,4'-methylene-bis (2,6-diethylenephenyl), 4,4'-methylene-bis (2-ethyle-6-methylphehyl), 4,4'-methylene-bis (2,6-diisopropylephenyl), 4,4'-methylene-bis (2-ethyl-5-methylcyclohexyl), 2,4,6-triisopropylephenyl, n-hexane, cyclohexane, dicyclohexylmethane, and methylcyclohexane, and the like.

Polycarbodiimides can be manufactured by a variety of methods known to those skilled in the art. Conventional manufacturing methods are described in US patent 2,941,956 or Japan Kokoku patent application S47-33279, J. Org. Chem., 28, 2069-2075 (1963), Chemical Reviews, 81 619-621 (1981). Typically, they are manufactured by the condensation reaction accompanying the decarboxylation of organic diisocyanate. This method yields an isocyanate-terminated polycarbodiimide.

Aromatic diisocyanates, aliphatic diisocyanates, and alicyclic diisocyanates, or mixtures thereof, for example, can be used to prepare polycarbodiimides. Suitable examples include 1,5-naphthalene diisocyanate, 4,4'-diphenylmethane diisocyanate, 4,4'-diphenyldimethylmethane diisocyanate, 1,3-phenylene diisocyanate, 1,4-phenylene diisocyanate, 2,4-trilene diisocyanate, 2,6-trilene diisocyanate, mixtures of 2,4-trilene diisocyanate and 2,6-trilene diisocyanate, hexamethylene diisocyanate, cyclohexane-1,4-diisocyanate, xylylene diisocyanate, isophoron diisocyanate, dicyclohexylmethane-4,4'-diisocyanate, methylcyclohexane diisocyanate, tetramethylxylylene diisocyanate, 2,6-diisopropylephenyl isocyanate, and 1,3,5-triisopropyl benzene-2,4-diisocyanate, and the like.

Chain termination agents can be used to control the polymerization and yield polycarbodiimides having end groups other than isocyanates. Examples suitable chain termination agents include monoisocyanates. Suitable monoisocyanates include phenyl isocyanate, tolyl isocyanate, dimethylphenyl isocyanate, cyclohexyl isocyanate, butyl isocyanate, and naphthyl isocyanate, etc.

Other suitable chain termination agents include alcohols, amines, imines, carboxylic acids, thiols, ethers, and epoxides. Examples include methanol, ethanol, phenols, cyclohexanol, N-methylethanolamine, poly(ethylene glycol) monomethylethers, poly(propylene glycol) monomethylethers, diethylamine, dicyclohexylamine, butylamine, cyclohexylamine, citric acid, benzoic acid, cyclohexanoic acid, ethylene mercaptan, arylmercaptan, and thiophenol.

The reaction of organic diisocyanates to form polycarbodiimides is performed in the presence of a carbodiimidation catalyst such as 1-phenyl-2-phospholene-1-oxide, 3-methyl-1-phenyl-2-phospholene-1-oxide, 1-ethyl-2-phospholene-1-oxide, 3-methyl-e-phospholene-1-oxide, and 3-phospholene isomers of the foregoing. Of these, 3-methyl-1-phenyl-2-phospholene-1-oxide is particularly reactive.

The polycarbodiimide is preferably present in the composition in about 0.3 to about 5 weight percent, or more preferably greater about 1 to about 2 weight percent, based on the total weight of the composition.

### Impact Modifier

The impact modifier is any impact modifier suitable for toughening polyamide resins. Examples of suitable impact modifiers are given in US patent 4,174,358. Preferred impact modifiers are carboxyl-substituted polyolefins, which are polyolefins that have carboxylic moieties attached thereto, either on the polyolefin backbone itself or on side chains. By 'carboxylic moiety' is meant carboxylic groups such as one or more of dicarboxylic acids, diesters, dicarboxylic monoesters, acid anhydrides, monocarboxylic acids and esters, and salts. Carboxylic salts are neutralized carboxylic acids. Useful impact modifiers are dicarboxyl-substituted polyolefins, which are polyolefins that have dicarboxylic moieties attached thereto, either on the polyolefin backbone itself or on side chains. By 'dicarboxylic moiety' is meant dicarboxylic groups such as one or more of dicarboxylic acids, diesters, dicarboxylic monoesters, and acid anhydrides. Preferred polyolefins are copolymers of ethylene and one or more additional olefins, wherein the additional olefins are hydrocarbons.

The impact modifiers will preferably be based an olefin copolymer, such as an ethylene/α-olefin polyolefin. Examples of olefins suitable for preparing the olefin copolymer include alkenes having 2 to 8 carbon atoms, such as ethylene, propylene, 1-butene, 1-heptene, or 1-hexene. Diene monomers such as 1,4-hexadiene, 2,5-norbomadiene, 1,7octadiene, and/or dicyclopentadiene may optionally be used in the preparation of the polyolefin. Preferred olefin copolymers are polymers derived from ethylene, at least one α-olefin having 3 to 6 carbon atoms, and at least one unconjugated diene. Particularly preferred polyolefins are ethylene-propylene-diene (EPDM) polymers made from 1,4-hexadiene and/or dicyclopentadiene, and ethylene/propylene copolymers.

The carboxyl moiety may be introduced to the olefin copolymer to form the impact modifier during the preparation of the polyolefin by copolymerizing with an unsaturated carboxyl-containing monomer. The carboxyl moiety may also be introduced by grafting the polyolefin with an unsaturated grafting agent containing a carboxyl moiety, such as an acid, ester, diacid, diester, acid ester, or anhydride.

Examples of suitable unsaturated carboxylic-containing comonomers or grafting agents include maleic acid, maleic anhydride, monoester maleate, metal salts of monoethylester maleate, fumaric acid, monoethylester fumarate, itaconic acid, vinylbenzoic acid, vinylphthalic acid, metal salts of monoethylester fumarate, and methyl, propyl, isopropyl, butyl, isobutyl, hexyl, cyclohexyl, octyl, 2-ethylhexyl, decyl, stearyl, methoxyethyl, ethoxyethyl, hydroxy, or ethyl, monoesters and diesters of maleic acid, fumaric acid, or itaconic acid, etc. Maleic anhydride is preferred.

A preferred impact modifier is an EPDM polymer or ethylene/propylene copolymer grafted with maleic anhydride. Blends of polyolefins, such as polyethylene, polypropylene, and EPDM polymers with polyolefins that have been grafted with an unsaturated compound containing a carboxyl moiety may be used as impact modifiers.

Other preferred impact modifiers are ionomers, which are carboxyl-group containing polymers that have been partially neutralized with bivalent metal cations such as zinc, manganese, magnesium, or the like. Preferred ionomers are ethylene/acrylic acid and ethylene/methacrylic acid copolymers that have been partially neutralized with zinc. Ionomers are commercially available under the Surly® trademark from E. I. du Pont de Nemours and Company, Wilmington, Delaware.

When used, the impact modifier is present in the composition in 2 to 29.7 weight percent, or more preferably, 2 to 19.7 weight percent, or yet more preferably 8 to 15 weight percent, based on the total weight of the composition.

The compositions of the present invention may further comprise other additives such as flame retardants, lubricants, mold-release agents, dyes and pigments, UV light stabilizers, plasticizers, heat stabilizers, anti-oxidants, and inorganic fillers.

In one embodiment of the present invention, the compositions of the present invention do not contain glass or glass fibers. In another embodiment, the compositions do not contain any reinforcing agents other than carbon black, such as inorganic reinforcing agents (including glass and glass fibers) or mineral fillers.

The compositions of the present invention are melt-mixed blends, wherein all of the polymeric components are well-dispersed within each other and all of the non-polymeric ingredients are dispersed in and bound by the polymer matrix, such that the blend forms a unified whole. Any melt-mixing method may be used to combine the polymeric components and non-polymeric ingredients of the present invention.

For example, the polymeric components and non-polymeric ingredients may be added to a melt mixer, such as, for example, a single or twin-screw extruder; a blender; a kneader; or a Banbury mixer, either all at once through a single step addition, or in a stepwise fashion, and then melt-mixed. When adding the polymeric components and non-polymeric ingredients in a stepwise fashion, part of the polymeric components and/or non-polymeric ingredients are first added and melt-mixed with the remaining polymeric components and non-polymeric ingredients being subsequently added and further melt-mixed until a well-mixed composition is obtained.

The compositions of the present invention may be formed into articles using methods known to those skilled in the art, such as, for example, injection molding, blow molding, extrusion, thermoforming, melt casting, vacuum molding, and rotational molding. The composition may be overmolded onto an article made from a different material. The composition may be extruded into films or sheets. The composition may be formed into monofilaments.

The resulting articles may be used in a variety of applications, including housings, automotive parts, electrical goods, electronics components, and construction materials. Preferred articles include gears.

### EXAMPLES

### Preparation of Examples 1-11 and Comparative Examples 1-6

The components shown in Tables 1-2 were melt-blended in a dual-shaft kneader, extruded, solidified, and cut into pellets. Ingredient quantities are given in weight percent based on the total weight of the composition.

### Preparation of Test Pieces

4.0 mm high × 175 mm long × 20 mm wide ISO test pieces were formed from the resulting pellets described above using normal molding conditions for non-reinforced nylon resin.

### Measurement of physical properties

The test pieces described above were used to measure the physical properties.
Tensile strength, modulus, and elongation at break were measured according to ISO 527-1/-2.
Flexural modulus and flexural strength were measured according to ISO 178. Notched Charpy impact strength was measured according to ISO 179/1eA.

The following materials were used as the ingredients in the compositions of the examples and comparative examples.
Polyamide (polyamide 6,6): Zytel® 101, available from DuPont.
Polycarbodiimide: Stabaxol P, an aromatic polycarbodiimide available from Bayer.
Impact modifier: EPDM rubber grafted with maleic anhydride.
Carbon fibers Carbon fibers were chopped carbon fibers made by Toho Tenax Co., Ltd. and having a diameter of 7 µm and a fiber length (chopped) of 6 mm that had been treated with a sizing agent.
Carbon fibers A was BESFIGHT® HTA-C6-S and contained 5 weight percent of an epoxy sizing agent.
Carbon fibers B was BESFIGHT®HTA-C6-NR and contained 4.5 weight percent of a polyamide 6 sizing agent.
Carbon fibers C was BESFIGHT® HTA-C6-US and contained 2.5 weight percent of a urethane sizing agent.

**Table 1**

| | Comp. Ex.1 | Ex. 1* | Comp. Ex.2 | Ex. 2* | Ex. 3* | Ex. 4* | Ex. 5* | Comp. Ex.3 | Ex. 6* |
|---|---|---|---|---|---|---|---|---|---|
| Polyamide | 95 | 93.5 | 90 | 89.5 | 88.5 | 88 | 85 | 90 | 88.5 |
| Polycarbodiimide | -- | 1.5 | -- | 0.5 | 1.5 | 2.0 | 5.0 | -- | 1.5 |
| Carbon fibers A | -- | -- | -- | -- | -- | - | -- | 10 | 10 |
| Carbon fibers B - | 5 | 5 | 10 | 10 | 10 | 10 | 10 | -- | -- |
| Tensile strength (MPa) | 126 | 130 | 176 | 164 | 166 | 160 | 157 | 166 | 155 |
| Elongation at break (%) | 2.2 | 7.2 | 3.1 | 3.9 | 4.3 | 4.4 | 4.3 | 2.7 | 4.3 |
| Tensile modulus (MPa) | 6700 | 6400 | 10110 | 10330 | 10490 | 10400 | 10630 | 9720 | 9530 |
| Flexural strength (MPa) | 203 | 191 | 255 | 242 | 247 | 239 | 236 | 238 | 231 |
| Flexural modulus (MPa) | 5602 | 5600 | 7960 | 7560 | 7460 | 7430 | 7410 | 7630 | 7580 |
| Notched Charpy (KJ/m) | 3.2 | 5.9 | 3.9 | 6.3 | 9.7 | 10.2 | 10.8 | 4.5 | 7.3 |

| | | | | | | | | | |
|---|---|---|---|---|---|---|---|---|---|
| Ingredient amounts are given in weight percentages relative to the total weight of the composition. * Reference Examples. | | | | | | | | | |

**Table 2**

| | Comp_{.} Ex. 4 | Ex. 7* | Comp. Ex. 5 | Ex. 8* | Comp. Ex. 6 | Ex. 9* | Ex.10 | Ex.11 |
|---|---|---|---|---|---|---|---|---|
| Polyamide | 90 | 88.5 | 85 | 83.5 | 80 | 78.5 | 83.5 | 78.5 |
| folycarbodiimide | -- | 1.5 | -- | 1.5 | -- | 1.5 | 1.5 | 1.5 |
| Impact modifier | -- | -- | -- | -- | -- | -- | 10 | 10 |
| Carbon fibers A | -- | -- | -- | -- | -- | -- | -- | -- |
| Carbon fibers B | -- | -- | 15 | 15 | 20 | 20 | 5 | 10 |
| Carbon fibers C | 10 | 10 | -- | -- | -- | -- | -- | -- |
| Tensile strength (MPa) | 173 | 163 | 207 | 191 | 220 | 209 | 102 | 133 |
| Elongation at break (%) | 3.6 | 4.0 | 3.0 | 3.1 | 3.0 | 3.0 | 9.4 | 6.4 |
| Tensile modulus (MPa) | 9590 | 9560 | 12240 | 13870 | 19030 | 17620 | 5200 | 8900 |
| Flexural strength (MPa) | 246 | 240 | 295 | 290 | 321 | 307 | 152 | 200 |
| Flexural modulus (MPa) | 7830 | 7640 | 10720 | 10400 | 12610 | 12380 | 4260 | 6370 |
| Notched Charpy (KJ/m²) | 4.7 | 9.0 | 6.7 | 11.0 | 8.5 | 10.9 | 15.3 | 16.5 |

| | | | | | | | | |
|---|---|---|---|---|---|---|---|---|
| * Reference Examples. | | | | | | | | |

Ingredient amounts are given in weight percentages relative to the total weight of the composition.

As is clear from a comparision between Comparative Example 1 and Example 1; Comparative Example 2 and Examples 2-5; Comparative Example 3 and Example 6; Comparative Example 4 and Example 7; Comparative Example 5 and Example 8; and Comparative Example 6 and Example 9, polyamide compositions containing carbon fibers containing a sizing agent and polycarbodiimide have significantly improved impact resistance without significant sacrifice in other physical properties relative to polyamide compositions containing carbon fibers containing a sizing agent that do not contain polycarbodiimide.

Examples 10 and 11 indicate that the presense of an impact modifier in polyamide compositions containing carbon fibers containing a sizing agent and polycarbodiimide have further increased impact resistance.

A comparison of between Examples 3, 6, and 7 indicates polyamide compositions containing carbon fibers containing polyamide and urethane sizing sizing agents and polycarbodiimide improved impact resistance relative to polyamide compositions containing carbon fibers containing an epoxy sizing sizing agent and polycarbodiimide.

## Claims

1. A polyamide composition, comprising: (a) at least one polyamide; (b) carbon fibers containing at least one sizing agent; and (c) at least one polycarbodiimide,
wherein the at least one polyamide is one or more selected from the group consisting of:polyamide 66/6 copolymer; polyamide 66/68 copolymer; polyamide 66/610 copolymer; polyamide 66/612 copolymer; polyamide 66/10 copolymer; polyamide 66/12 copolymer; polyamide 6/68 copolymer; polyamide 6/610 copolymer; polyamide 6/612 copolymer; polyamide 6/10 copolymer; polyamide 6/12 copolymer; polyamide 6/66/610 terpolymer; polyamide 6/66/69 terpolymer; polyamide 6/66/11 terpolymer; polyamide 6/66/12 terpolymer; polyamide 6/610/11 terpolymer; polyamide 6/610/12 terpolymer; polyamide 6/66/PACM (bis-p-{aminocyclohexyl} methane) terpolymer,
or
wherein the at least one polyamide is one or more selected from the group consisting of: polyamide 6; polyamide 66; polyamide 46; polyamide 69; polyamide 610; polyamide 612; polyamide 1010; polyamide 11; polyamide 12; semi-aromatic polyamides; a polyamide of hexamethyleneterephthalamide and 2-methylpentamethyleneterephthalamide; a polyamide of hexamethylene isophthalamide and hexamethylene adipamide; a polyamide of hexamethylene terephthalamide, hexamethylene isophthalamide, and hexamethylene adipamide; and copolymers and mixtures thereof,
or
wherein the at least one polyamide is one or more selected from the group consisting of poly(m-xylylene adipamide); poly(dodecamethylene terephthalamide);
poly(decamethylene terephthalamide); poly(nonamethylene terephthalamide); and a polyamide of hexamethylene terephthalamide and hexamethylene adipamide, and
wherein the composition comprises 2 to 29.7 weight percent of impact modifier (d), based on the total weight of the composition.

2. The composition of claim 1, wherein the composition comprises 65 to 94.7 weight percent of polyamide (a) or 85 to 90 weight percent of polyamide (a).

3. The composition of claim 1, wherein the composition comprises 75 to 94.7 weight percent of polyamide (a), 5 to 20 weight percent of carbon fibers (b), and 0.3 to 5 weight percent of polycarbodiimide (c), wherein the weight percentages are based on the total weight of the composition.

4. The composition of claim 1, wherein the polyamide is polyamide 66.

5. The composition of claim 1, wherein the composition comprises 2 to 19.7 weight percent of impact modifier (d), based on the total weight of the composition.

6. The composition of claim 1, wherein the impact modifier comprises an ethylene-propylene-diene polymer grafted with maleic anhydride or an ethylene-propylene copolymer grafted with maleic anhydride or wherein the impact modifier is an ionomer.

7. The composition of claim 1, wherein the composition comprises 5 to 30 weight percent of carbon fibers (b).

8. The composition of claim 1, wherein the composition comprises 0.3 to 5 weight percent of polycarbodiimide (c).

9. The composition of claim 1, wherein the at least one polycarbodiimide is an aliphatic, alicyclic or aromatic polycarbodiimide.

10. An article molded from the composition of claim 1.

11. The article of claim 10 in the form of a gear.

## Patentansprüche

1. Polyamidzusammensetzung, die aufweist (a) mindestens ein Polyamid; (b) Kohlefasern, die mindestens ein Schlichtemittel enthalten; und (c) mindestens ein Polycarbodiimid,
wobei das mindestens eine Polyamid eine oder mehrere Verbindungen aufweist, die aus der Gruppe ausgewählt sind, die aus den folgenden Verbindungen besteht: Polyamid 66/6-Copolymer, Polyamid 66/68-Copolymer; Polyamid 66/610-Copolymer; Polyamid 66/612-Copolymer; Polyamid 66/10-Copolymer; Polyamid 66/12-Copolymer; Polyamid 6/68-Copolymer; Polyamid 6/610-Copolymer; Polyamid 6/612-Copolymer; Polyamid 6/10-Copolymer; Polyamid 6/12-Copolymer; Polyamid 6/66/610-Terpolymer; Polyamid 6/66/69-Terpolymer; Polyamid 6/66/11-Terpolymer; Polyamid 6/66/12-Terpolymer; Polyamid 6/610/11-Terpolymer; Polyamid 6/610/12-Terpolymer; Polyamid 6/66/PACM(Bis-p-{Aminocyclohexyl}methan)-Terpolymer,
oder
wobei das mindestens eine Polyamid eine oder mehrere Verbindungen aufweist, die aus der Gruppe ausgewählt sind, die aus den folgenden Verbindungen besteht: Polyamid 6; Polyamid 66; Polyamid 46; Polyamid 69; Polyamid 610; Polyamid 612; Polyamid 1010; Polyamid 11; Polyamid 12; semiaromatische Polyamide; ein Polyamid aus Hexamethylenterephthalamid und 2-Methylpentamethylenterephthalamid; ein Polyamid aus Hexamethylenisophthalamid und Hexamethylenadipamid; eine Polyamid aus Hexamethylenterephthalamid, Hexamethylenisophthalamid und Hexamethylenadipamid und Copolymere und Gemische davon,
oder
wobei das mindestens eine Polyamid eine oder mehrere Verbindungen aufweist, die aus der Gruppe ausgewählt sind, die aus den folgenden Verbindungen besteht: Poly-(m-xylylenadipamid); Poly(dodecamethylenterephthalamid); Poly(decamethylenterephthalamid); Poly(nonamethylenterephthalamid) und einem Polyamid aus Hexamethylenterephthalamid und Hexamethylenadipamid,
und
wobei die Zusammensetzung 2 bis 29,7 Gew.-% schlagzähmachenden Zusatzstoff (d) aufweist, bezogen auf das Gesamtgewicht der Zusammensetzung.

2. Zusammensetzung nach Anspruch 1, wobei die Zusammensetzung 65 bis 94,7 Gew.-% Polyamid (a) oder 85 bis 90 Gew.-% Polyamid (a) aufweist.

3. Zusammensetzung nach Anspruch 1, wobei die Zusammensetzung 75 bis 94,7 Gew.-% Polyamid (a), 5 bis 20 Gew.-% Kohlefasern (b) und 0,3 bis 5 Gew.-% Polycarbodiimid (c) aufweist, wobei die Anteile in Gew.-% auf das Gesamtgewicht der Zusammensetzung bezogen sind.

4. Zusammensetzung nach Anspruch 1, wobei das Polyamid Polyamid 66 ist.

5. Zusammensetzung nach Anspruch 1, wobei die Zusammensetzung 2 bis 19,7 Gew.-% schlagzähmachenden Zusatzstoff (d) aufweist, bezogen auf das Gesamtgewicht der Zusammensetzung.

6. Zusammensetzung nach Anspruch 1, wobei der schlagzähmachende Zusatzstoff ein mit Maleinsäureanhydrid propfpolymerisiertes Ethylen-Propylen-Dien-Polymer oder ein mit Maleinsäureanhydrid propfpolymerisiertes Ethylen-Propylen-Copolymer aufweist, oder wobei der schlagzähmachende Zusatzstoff ein Ionomer ist.

7. Zusammensetzung nach Anspruch 1, wobei die Zusammensetzung 5 bis 30 Gew.-% Kohlefasern (b) aufweist.

8. Zusammensetzung nach Anspruch 1, wobei die Zusammensetzung 0,3 bis 5 Gew.-% Polycarbodiimid (c) aufweist.

9. Zusammensetzung nach Anspruch 1, wobei das mindestens eine Polycarbodiimid ein aliphatisches, alicyclisches oder aromatisches Polycarbodiimid ist.

10. Aus der Zusammensetzung nach Anspruch 1 formgepreßter Artikel.

11. Artikel nach Anspruch 10 in Form eines Zahnrads.

## Revendications

1. Composition de polyamide, comprenant: (a) au moins un polyamide; (b) des fibres de carbone contenant au moins un agent d'encollage; et (c) au moins un polycarbodiimide,
dans laquelle le au moins un polyamide est un ou plusieurs composé(s) choisi(s) dans le groupe constitué de: copolymère de polyamides 66/6; copolymère de polyamides 66/68; copolymère de polyamides 66/610; copolymère de polyamides 66/612; copolymère de polyamides 66/10; copolymère de polyamides 66/12; copolymère de polyamides 6/68; copolymère de polyamides 6/610; copolymère de polyamides 6/612; copolymère de polyamides 6/10; copolymère de polyamides 6/12; terpolymère de polyamides 6/66/610; terpolymère de polyamides 6/66/69; terpolymère de polyamides 6/66/11; terpolymère de polyamides 6/66/12; terpolymère de polyamides 6/610/11; terpolymère de polyamides 6/610/12; terpolymère de polyamides 6/66/PACM (bis-p-{aminocyclohexyl} méthane),
ou
dans laquelle le au moins un polyamide est un ou plusieurs composé(s) choisi(s) dans le groupe constitué de: polyamide 6; polyamide 66; polyamide 46; polyamide 69; polyamide 610; polyamide 612; polyamide 1010; polyamide 11; polyamide 12; polyamides semi-aromatiques; un polyamide d'hexaméthylène téréphtalamide et de 2-méthylpentaméthylènetéréphtalamide; un polyamide d'hexaméthylène isophtalamide et d'hexaméthylène adipamide; un polyamide d'hexaméthylène téréphtalamide, d'hexaméthylène isophtalamide et d'hexaméthylène adipamide; et copolymères et mélanges de ceux-ci,
ou
dans laquelle le au moins un polyamide est un ou plusieurs composé(s) choisi(s) dans le groupe constitué de: poly(m-xylylène adipamide); poly(dodécaméthylène téréphtalamide); poly(décaméthylène téréphtalamide); poly(nonaméthylène téréphtalamide); et un polyamide d'hexaméthylène téréphtalamide et d'hexaméthylène adipamide,
et
où la composition comprend de 2 à 29,7 pour-cent en poids de modificateur de résistance au choc (d), sur la base du poids total de la composition.

2. Composition selon la revendication 1, où la composition comprend de 65 à 94,7 pour-cent en poids de polyamide (a) ou de 85 à 90 pour-cent en poids de polyamide (a).

3. Composition selon la revendication 1, où la composition comprend de 75 à 94,7 pour-cent en poids de polyamide (a), de 5 à 20 pour-cent en poids de fibres de carbone (b) et de 0,3 à 5 pour-cent en poids de polycarbodiimide (c), où les pourcentages en poids sont basés sur le poids total de la composition.

4. Composition selon la revendication 1, dans laquelle le polyamide est le polyamide 66.

5. Composition selon la revendication 1, où la composition comprend de 2 à 19,7 pour-cent en poids de modificateur de résistance au choc (d), sur la base du poids total de la composition.

6. Composition selon la revendication 1, dans laquelle le modificateur de résistance au choc comprend un polymère d'éthylène-propylène-diène greffé avec de l'anhydride maléique ou un copolymère d'éthylène-propylène greffé avec de l'anhydride maléique ou dans laquelle le modificateur de résistance au choc est un ionomère.

7. Composition selon la revendication 1, où la composition comprend de 5 à 30 pour-cent en poids de fibres de carbone (b).

8. Composition selon la revendication 1, où la composition comprend de 0,3 à 5 pour-cent en poids de polycarbodiimide (c).

9. Composition selon la revendication 1, dans laquelle le au moins un polycarbodiimide est un polycarbodiimide aliphatique, alicyclique ou aromatique.

10. Article moulé à partir de la composition selon la revendication 1.

11. Article moulé selon la revendication 10 sous la forme d'un engrenage.
